# EUROPEAN PATENT APPLICATION

(11) **EP 2 916 529 A1**
(43) Date of publication of application: **09.09.2015**
(21) Application number: 13796818.6
(22) Date of filing: 29.07.2013
(51) Int. Cl.: H04M 1/725

(54) **METHOD AND DEVICE FOR ACCESSING HISTORICAL INTERFACE AND MOBILE TERMINAL**

(30) Priority: 31.10.2012 CN 201210428591
(71) Applicant: ZTE Corporation, Shenzhen, Guangdong 518057 (CN)
(72) Inventor: HUANG, Qinbo, Shenzhen Guangdong 518057 (CN); TENG, Wenxing, Shenzhen Guangdong 518057 (CN); XU, Hua, Shenzhen Guangdong 518057 (CN); ZHANG, Benquan, Shenzhen Guangdong 518057 (CN); ZHONG, Sheng, Shenzhen Guangdong 518057 (CN)
(74) Representative: Mozzi, Matteo
(86) International application number: PCT/CN2013/080320
(87) International publication number: WO 2013/178176

(57) **Abstract**

A method and an apparatus for accessing a historical interface and a mobile terminal are provided. The method includes: one or more interfaces containing user data and the user data of the one or more interfaces are stored; and the one or more interfaces and the user data of the one or more interfaces are scheduled according to a corresponding relationship of the one or more interfaces and the user data of the one or more interfaces. The technical solution facilitates scheduling of the historical interface and the user data for a user, effectively prevents the loss of the user data, enables the user to perform repeated operation in some specific interfaces, improves the interactivity and greatly enhances the user experience.

## Description

### Technical Field

The embodiments of the present invention relate to the communication field, and in particular to a method and an apparatus for accessing a historical interface, and a mobile terminal.

### Background

With the increasing popularity of mobile phones, they have become an indispensable communication tool in people's daily life. The mobile phones not only greatly improve the work efficiency of people, but also change people's way of life.

With the increasing widespread popularization and rapid development of smart phones, the current use frequency of Internet services or communication services is getting higher. The uses of WeChat, microblog, online shopping clients and online banking clients have brought great convenience to the majority of the smartphone users.

However, the current design of the smart phones has at least the following problem. After the operation on one interface, generally, a user input (including but not limited to texts input by the user, also including some other operations performed by some users on the interface) on the interface may lose, and the user cannot find it easily. It is impossible or not easy for a user to repeat the previous operations, or the repeated operation of the user is increased, and thus the user experience is poor.

### Summary

For the problem that a user cannot conveniently repeat an operation on the historical interface or the repeated operation of the user is increased, a method and an apparatus for accessing a historical interface, and a mobile terminal are provided in the embodiments of the present invention to at least solve the problem.

According to one embodiment of the present invention, a method for accessing a historical interface is provided, including: one or more interfaces containing user data and the user data of the one or more interfaces are stored; and the one or more interfaces and the user data of the one or more interfaces are scheduled according to a corresponding relationship of the one or more interfaces and the user data of the one or more interfaces.

In the described embodiment, one or more interfaces containing user data and the user data of the one or more interfaces are stored includes: multiple associated interfaces are stored in a group and the user data of the one or more interfaces.

In the described embodiment, one or more interfaces containing user data and the user data of the one or more interfaces are stored includes the user data of the one or more interfaces are encrypted and the one or more interfaces and the encrypted user data of the one or more interfaces are stored.

In the described embodiment, the method further includes setting storage information about the one or more interfaces and the user data of the one or more interfaces according to configuration parameters.

In the described embodiment, the storage information includes at least one of the following: storage deadline, storage space, storage amount, encryption manner for the user data, and group dividing condition for grouping storage.

In the described embodiment, the user data comprise at least one of the following: a user operation record, an interface switching record and user input data.

According to another embodiment of the present invention, an apparatus for accessing a historical interface is provided, including: a storage component, configured to store one or more interfaces containing user data and the user data of the one or more interfaces; and a scheduling component, configured to schedule the one or more interfaces and the user data according to a corresponding relationship between the one or more interfaces and the user data.

In the described embodiment, the storage component is configured to store, in a group, multiple associated interfaces and the user data of the multiple associated interfaces.

In the described embodiment, the storage component includes: an encryption element, configured to encrypt the user data of the one or more interfaces; and a storage element, configured to store the one or more interfaces and the encrypted user data of the one or more interfaces.

In the described embodiment, the apparatus further includes a setting component, configured to set storage information about the one or more interfaces and the user data of the one or more interfaces according to configuration parameters.

According to still another aspect of the present invention, a mobile terminal is provided, including any one of the apparatus for accessing the historical interface provided according to an embodiment of the present invention.

By way of storing one or more interfaces containing user data and the user data of the one or more interfaces and scheduling the one or more interfaces and the user data of the one or more interfaces according to a corresponding relationship between the one or more interfaces and the user data of the one or more interfaces, the embodiments of the present invention facilitate scheduling of the historical interface and the user data for a user, effectively prevent the loss of the user data, enable the user to perform repeated operation in some specific interfaces, improve the interactivity and greatly enhance the user experience.

### Brief Description of the Drawings

Drawings, provided for further understanding of the present invention and forming a part of the specification, are used to explain the present invention together with embodiments of the present invention rather than to limit the present invention. In the drawings:
Fig. 1 is a structural block diagram of an apparatus for accessing a historical interface according to an embodiment of the present invention;
Fig. 2 is a structural block diagram of an example storage component according to an embodiment of the present invention;
Fig. 3 is a structural block diagram of an example apparatus for accessing a historical interface according to an embodiment of the present invention;
Fig. 4 is a structural block diagram of an example mobile terminal according to an embodiment of the present invention;
Fig. 5 is a flowchart of a method for accessing a historical interface according to an embodiment of the present invention;
Fig. 6 is a flowchart of a method for accessing a historical interface according to embodiment I of the present invention;
Fig. 7 is a flowchart of a method for accessing a historical interface according to embodiment II of the present invention; and
Fig. 8 is a flowchart of a method for accessing a historical interface according to embodiment III of the present invention.

### Detailed Description of the Embodiments

The present invention is described below with reference to the accompanying drawings and embodiments in detail. Note that, the embodiments of the present invention and the features of the embodiments can be combined with each other if there is no conflict.

In view of the defects in the related art, a method and an apparatus for accessing a historical interface and a mobile terminal are provided in the embodiment of the present invention. By storing one or more interface having been operated by a user and having user data, including logic of the related one or more interfaces and related user input data on the one or more interfaces, it is convenient for a user to restore or repeat some operations under certain circumstances, such as the circumstances of abnormal power-off and batch processing some operations. At the same time, this method has a relatively high real-time performance, effectiveness and reliability. The solution of the embodiments of the present invention is described as follows.

According to an embodiment of the present invention, an apparatus for accessing a historical interface is provided.

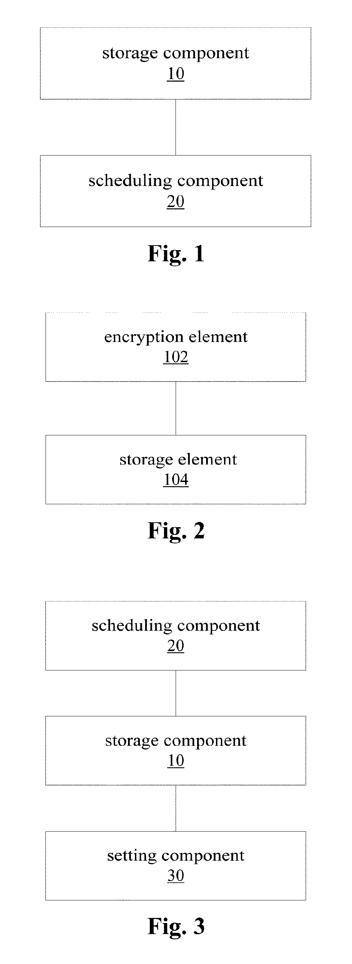

Fig. 1 is a structural block diagram of an apparatus for accessing a historical interface according to an embodiment of the present invention, as shown in Fig. 1; the apparatus mainly includes a storage component **10** and a scheduling component **20.** The storage component **10** is configured to store one or more interfaces containing user data and the user data of the one or more interfaces; and the scheduling component **20** is coupled to the storage component **10** and is configured to schedule the one or more interfaces and the user data according to a corresponding relationship between the one or more interfaces and the user data.

By way of storing, by the storage component **10,** one or more interfaces containing user data and user data of the one or more interfaces and scheduling, by the scheduling component **20,** the one or more interfaces and the user data of the one or more interfaces according to a corresponding relationship between the one or more interfaces and the user data of the one or more interfaces, the embodiment of the present invention facilitates scheduling of the historical interface and the user data for a user, effectively prevents the loss of the user data, enables the user to perform repeated operation in some specific interfaces, improves the interactivity and greatly enhances the user experience.

In one implementation of the embodiment of the present invention, the storage component **10** is configured to store, in a group, multiple associated interfaces and the user data of the multiple associated interfaces. In the described embodiment, the correlated historical record interfaces of the user may be divided into groups automatically or in a customized way, so as to save continuous operations of the user and related operation data.

Fig. 2 is a structural block diagram of an example storage component according to an embodiment of the present invention, as shown in Fig. 2, the storage component **10** may include: an encryption element **102,** configured to encrypt the user data of the one or more interfaces; and a storage element **104,** configured to store the one or more interfaces and the encrypted user data of the one or more interfaces. By means of the present example implementation, the user data are encrypted to improve the security of the user data.

In one implementation of the embodiment of the present invention, in order to be convenient for the user to set various storage information, such as the size of storage space, storage amount, etc. the apparatus for accessing the historical interface also provides an interface (also known as entry) for user equipment, and the example apparatus for accessing the historical interface according to an embodiment of the present invention is described in details below in combination with Fig. 3.

Fig. 3 is a structural block diagram of an example apparatus for accessing a historical interface according to an embodiment of the present invention, as shown in Fig. 3, the apparatus also may include: a setting component **30,** connected to the storage component **10** and configured to set storage information about the one or more interfaces and the user data of the one or more interfaces according to configuration parameters. In practical applications, the storage information includes but is not limited to at least one of the following: storage deadline, storage space, storage amount, encryption manner for the user data, and group dividing condition for grouping storage.

According to an embodiment of the present invention, a mobile terminal is also provided, including any one of the apparatuses for accessing the historical interface according to an embodiment of the present invention. An example mobile terminal of an embodiment of the present invention is described as follows.

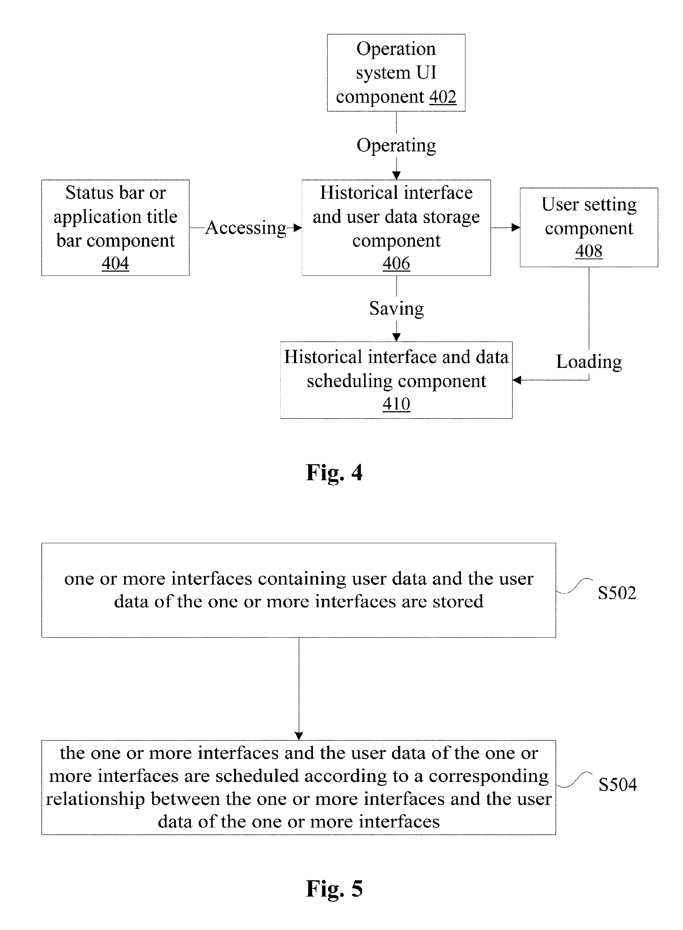

Fig. 4 is a structural block diagram of an example mobile terminal according to an embodiment of the present invention, as shown in figure 4, the mobile terminal may include an operation system user interface (UI) component **402,** a status bar or application title bar component **404,** a historical interface and user data storage component **406,** a user setting component **408** and a historical interface and data scheduling component **410.**

The operation system UI component **402** is an interface generated on the basis of a mobile terminal UI system, the user may use various functions through operations of the interface and input relevant data.

The status bar or application title bar component **404** is configured to access the historical interface of the terminal by using elements, including but not limited to a status bar or an application title bar and other multi-tasking operation keys and buttons, etc., as the user interface.

The historical interface and user data storage component **406** is configured to store the historical interface and user data and includes but is not limited to a removable memory, a built-in memory or a system memory space, etc. The historical interface and user data storage component **406** is equivalent to the storage component **10.**

The user setting component **408** is configured to provide some custom interfaces, such as various storage limits for historical record data storage, group dividing condition for the historical interface, storage location of historical data, a way of encryption, etc. The user setting component **408** is equivalent to the setting component **30.**

The historical interface and data scheduling component **410** is configured to select relevant data of the historical interface storage component through the selection of the user according to conditions such as an interface identity (ID). The historical interface and user data storage component **410** is equivalent to the scheduling component **20.**

According to an embodiment of the present invention, corresponding to the mobile terminal and apparatus of an embodiment of the present invention, a method for accessing a historical interface is also provided.

Fig. 5 is a flowchart of a method for accessing a historical interface according to an embodiment of the present invention, as shown in Fig. 5, the method mainly includes steps S502 to S504:
Steps S502, one or more interfaces containing user data and the user data of the one or more interfaces are stored; and
Steps S504, the one or more interfaces and the user data of the one or more interfaces are scheduled according to a corresponding relationship between the one or more interfaces and the user data of the one or more interfaces.

By way of storing one or more interfaces containing user data and user data of the one or more interfaces and scheduling the one or more interfaces and the user data of the one or more interfaces according to a corresponding relationship between the one or more interfaces and the user data of the one or more interfaces, the embodiment of the present invention facilitates scheduling of the historical interface and the user data for a user, effectively prevents the loss of the user data, enables the user to perform repeated operation in some specific interfaces, improves the interactivity and greatly enhances the user experience.

In one implementation of the embodiment of the present invention, in order to be convenient for the user to check, multiple associated interfaces and the user data of the multiple associated interfaces may be stored in a group. In the described embodiment, the correlated historical record interfaces of the user may be divided into groups automatically or in a customized way, so as to save continuous operations of the user and related operation data.

In another implementation of the embodiment of the present invention, when the interface and the user data of the one or more interfaces are stored, the user data of the one or more interfaces may be encrypted, and the one or more interfaces and the encrypted user data of the one or more interfaces are stored. In practical applications, the way of encryption and the user data which need encryption may be configured. By the present example implementation, the user data are encrypted to improve the security of the user data.

In order to realize the personalized operation, in one implementation of the embodiment of the present invention, storage information about the one or more interfaces and the user data of the one or more interfaces also may be set according to configuration parameters. In the described embodiment, the storage information includes but is not limited to at least one of the following: storage deadline, storage space, storage amount, encryption manner for the user data, and group dividing condition for grouping storage. For example, the user may set the number of the historical interfaces of each application, the storage duration of all the historical data, the storage space of the historical data, etc.

In practical applications, the user can keep the interfaces of all the user data which have been operated by the user to a system storage space without repeatedly storing the historical data *per se,* and the data portion therein may be encrypted and stored so as to ensure the adequate security. The user may see a list of history stack interfaces by clicking the title bar or the status bar, and then may switch to any of the operation interfaces which include some data, such as user operation records, interface switching records, text input records, etc.

In the described embodiment, the logic of the historical interface and the associated user input data on the interface may automatically be filled after being loaded. It is convenient for a user to restore or repeat some operations under certain circumstances, such as the circumstances of abnormal power-off and batch processing some operations. Further, the correlated historical record interfaces of the user may be divided in a group automatically or in a customized way, so as to save continuous operations of the user and related operation data.

In the described embodiment, the user may set various upper limits for saving the user data by the setting component, such as the number of pages of the applications, the size of the historical data storage space, etc. The user may set the retention period of the historical data, for example the number of the historical interfaces of each application, such as 5, the storage duration of all the historical data, such as 5 days, and space occupied by the storage of all the historical data, such as 5M. The historical data can be effectively prevented from taking up too much memory to affect the user experience.

By means of the embodiment of the present invention, by effectively reducing the inconvenience of the operation or input on the mobile terminal, the user can effectively make full use of the data input by himself and the interface data at any time to perform repeated operations or prevent abnormal data loss, thereby increasing the user safety and greatly improving the user experience.

For example, the user can send a modified short message again after having sent the short message conveniently. The user can copy and paste data conveniently on different historical interfaces. The user may never worry that the application fails due to a network failure after filling in a data table through the interface, with the previous data completely disappears. The user can edit a plurality of notebooks at the same time to perform multi-tasking processing, etc.

In the embodiment of the present invention, the data saved by the mobile terminal have two types, one type is the system-related data, such as the application name of the user operation, and the specific interface unique serial number ID of the application, such as a browser and a certain empty web page of the browser; and the other type is user data, such as a website accessed by the user, relevant information of an account and a password input by the user, etc. The data of the two types will not be great, it is greatly convenient for the user to schedule the data after saving same, which saves one or more repeat operations of the user and enables the user to timely use the previous operation and input information. The solution of the embodiment of the present invention is described below by the example embodiments of above-mentioned embodiments.

### Example 1

In an embodiment of the present invention, the method of the embodiment of the present invention is described by taking rapidly sending similar information to different contacts or sending the same information to different contacts as an example.

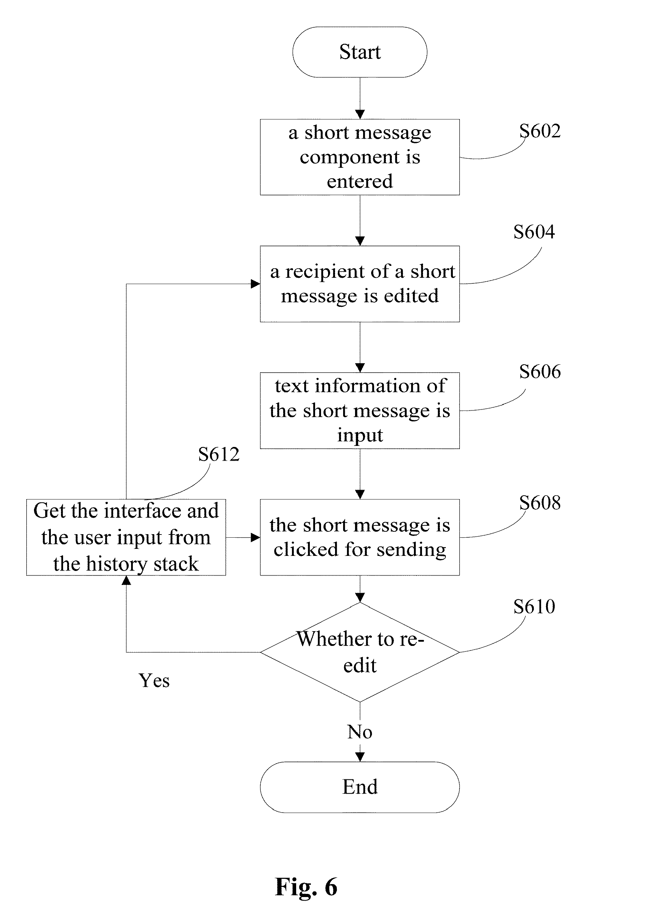

Fig. 6 is a flowchart of a method for accessing a historical interface according to embodiment I of the present invention; as shown in Fig. 6, the method mainly includes steps S602 to S612:
step S602, a short message component is entered;
step S604, a recipient of a short message is edited;
step S606, text information of the short message is input;
step S608, the short message is clicked for sending, and the back stage may automatically save a text editing interface id and the recipient and the short message text information which has been bound with the id to a historical data region;
step S610, it is prompted whether to re-edit; if yes, enter step S612, otherwise, end; and
step S612, if the user wants to simply resend, the interface and the user input will be get from the history stack. The interface can be loaded directly to click a sending button. Or else, enter step S604, sending is performed after modifying information such as the recipient and the short message text.

The embodiment of the present invention has a better user experience compared with the traditional short message forwarding way which only supports text editing, since it is possible for some users to send different information to the same person when sending again, such a short message forwarding function cannot meet the user needs, and the solution of the embodiment of the present invention can prevent the user from repeatedly inputting data.

### Example II

In an embodiment of the present invention, the description is performed by taking quickly editing contact records in the same group as an example.

In practical applications, it is required to batch update or newly establish information of some contacts with the same information, because some data are repeated, it leads the user to take great pains to do some repeated operations, and the contact records of the same group can be quickly edited by the method of the embodiment of the present invention.

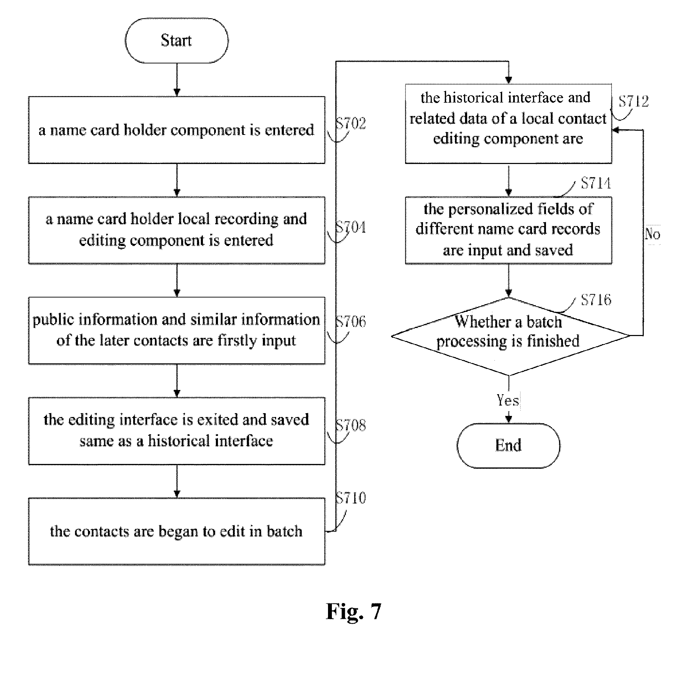

Fig. 7 is a flowchart of a method for accessing a historical interface according to embodiment II of the present invention, as shown in Fig. 7, the method mainly includes steps S702 to S716:
step S702, a name card holder component is entered;
step S704, a name card holder local recording and editing component is entered;
step S706, public information and similar information of the later contacts are firstly input through a local editing interface so as to be convenient to be saved subsequently after being edited simply on this basis;
step S708, the editing interface is exited and saved same as a historical interface;
step S710, the contacts are began to edit in batch;
step S712, the historical interface and related data of a local contact editing component are opened by clicking a title bar shortcut of the card holder component;
step S714, the personalized fields of different name card records are input and saved;
step S716, it is judged whether to edit the name card record again, if the name card record is required to be edited again, proceed to step S712, otherwise, end.

### Example III

In the embodiment of the present invention, the description is performed by taking submitting a user application form or an account registration through a browser as an example.

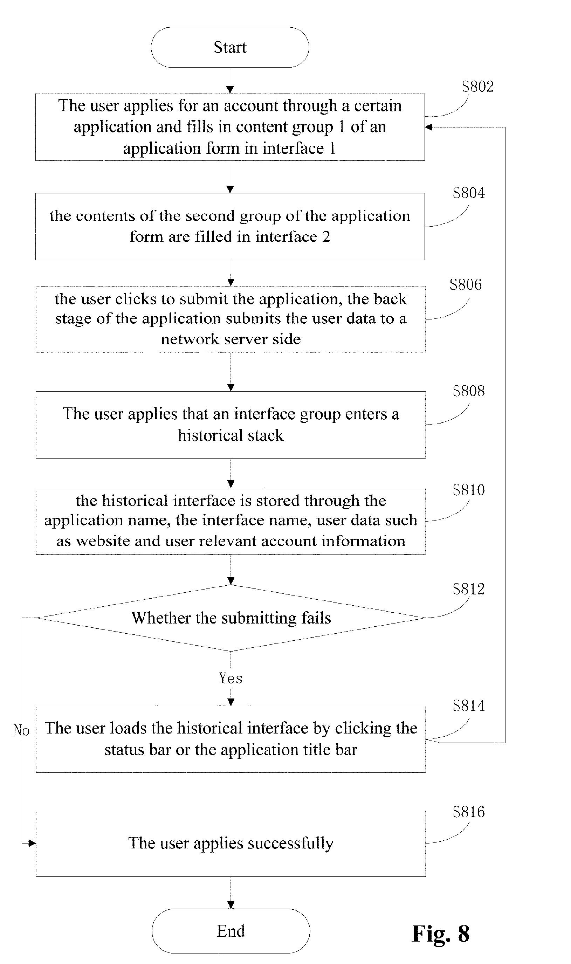

Fig. 8 is a flowchart of a method for accessing a historical interface according to embodiment III of the present invention, as shown in Fig. 8, the method mainly includes steps S802 to S816:
step S802, the user accesses certain account application webpage by a browser and fills in relevant account information. Since the information is too much, the present interface only submits relevant account information about type 1, and step S804 is proceeded to continue;
step S804, the contents of the second group of the application form are filled in interface 2;
step S806, the user clicks to submit the application, the back stage of the application submits the user data to a network server side;
step S808, the user applies that the interfaces enter a history storage region sequentially;
step S810, the historical interface is stored through the application name, the interface name, user data such as website and user relevant account information;
step S812, it is judged whether the submitting fails, if the submitting fails after the submitting because of the network, the user data loses, then proceed to step S814, otherwise, proceed to step S816;
step S814, the user loads the historical interfaces in a specific manner, if there are two relevant historical interfaces, the two interfaces are extracted in a group and then are represented to the user in order, and proceed to step S802; and
step S816, the user applies successfully, end.

The method of the embodiments of the present invention can enable the user of the mobile terminal to make full use of user operation records and data, thereby improving the user experience. Of course, the data manipulation also can be performed by other similar ways, which is not detailed herein.

It can be seen from the description above that the embodiments of the present invention achieve the following technical effects: by effectively reducing the inconvenience of the operation or inputting on the mobile terminal, the user can effectively make full use of the data input by himself and the interface data at any time to perform repeated operations or prevent abnormal data loss, thereby increasing the user safety and greatly improving the user experience.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention.

## Claims

1. A method for accessing a historical interface, **characterized by** comprising:
storing one or more interfaces containing user data and the user data of the one or more interfaces; and
scheduling the one or more interfaces and the user data of the one or more interfaces according to a corresponding relationship between the one or more interfaces and the user data of the one or more interfaces.

2. The method according to claim 1, **characterized in that** storing the one or more interfaces containing the user data and the user data of the one or more interfaces comprises:
storing, in a group, multiple associated interfaces and the user data of the multiple associated interfaces.

3. The method according to claim 1 or 2, **characterized in that** storing the one or more interfaces containing the user data and the user data of the one or more interfaces comprises:
encrypting the user data of the one or more interfaces; and
storing the one or more interfaces and the encrypted user data of the one or more interfaces.

4. The method according to any one of claims 1 to 3, **characterized by** further comprising:
setting storage information about the one or more interfaces and the user data of the one or more interfaces according to configuration parameters.

5. The method according to claim 4, **characterized in that** the storage information comprises at least one of the following: storage deadline, storage space, storage amount, encryption manner for the user data, and group dividing condition for grouping storage.

6. The method according to any one of claims 1 to 5, **characterized in that** the user data comprise at least one of the following: a user operation record, an interface switching record and user input data.

7. An apparatus for accessing a historical interface, **characterized by** comprising:
a storage component, configured to store one or more interfaces containing user data and the user data of the one or more interfaces; and
a scheduling component, configured to schedule the one or more interfaces and the user data according to a corresponding relationship between the one or more interfaces and the user data.

8. The apparatus according to claim 7, **characterized in that**
the storage component is configured to store, in a group, multiple associated interfaces and the user data of the multiple associated interfaces.

9. The apparatus according to claim 7 or 8, **characterized in that** the storage component comprises:
an encryption element, configured to encrypt the user data of the one or more interfaces; and
a storage element, configured to store the one or more interfaces and the encrypted user data of the one or more interfaces.

10. The apparatus according to any one of claims 7 to 9, **characterized in that** the apparatus further comprises:
a setting component, configured to set storage information about the one or more interfaces and the user data of the one or more interfaces according to configuration parameters.

11. A mobile terminal, comprising the apparatus for accessing the historical interface of any one of claims 7 to 10.
